Europäisches Patentamt

European Patent Office

Office européen des brevets

(11) Veröffentlichungsnummer: **0 153 971**
**B1**

(12) # EUROPÄISCHE PATENTSCHRIFT

(45) Veröffentlichungstag der Patentschrift:
**05.10.88**

(51) Int. Cl.⁴: **A 01 C 7/20,** A 01 C 7/08,
**A 01 B 63/24**

(21) Anmeldenummer: **84102468.0**

(22) Anmeldetag: **08.03.84**

(54) **Verfahren zur Steuerung der Korndichte der Aussaat sowie Sämaschine zur Durchführung dieses Verfahrens.**

(43) Veröffentlichungstag der Anmeldung:
**11.09.85 Patentblatt 85/37**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**DE - A - 3 117 536**
**FR - A - 1 267 008**
**FR - A - 1 353 116**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 Postfach 3055, D-8500 Nürnberg (DE)**

## Beschreibung

Die Erfindung betrifft ein Verfahren zur Steuerung der Korndichte der Aussaat bei einer Sämaschine mit einer Vielzahl von quer zur Fahrtrichtung nebeneinander angeordneter Säschare zum Säen des Saatgutes in voneinander beabstandeten Säreihen, wobei der Säreihenabstand geändert wird durch seitliches Verschieben der Säschare quer zur Fahrtrichtung derart, dass die Säreihen gleichweit voneinander entfernt sind.

Unter Korndichte der Aussaat wird hier die durchschnittlich pro Quadratmeter Feld zur Aussaat gebrachte Kornzahl verstanden. Die Verteilung der Körner auf dem Feld ist jedoch nicht gleichmässig. Vielmehr werden die Körner durch die Sämaschine in voneinander beabstandeten Säreihen zur Aussaat gebracht, in denen der Abstand der Körner zueinander – kurz Verteildichte genannt – in der Regel wesentlich kleiner als der Säreihenabstand ist. Üblicherweise wird die Korndichte der Aussaat, die von Pflanze zu Pflanze in der Regel verschieden ist, über die Verteildichte des Saatgutes gesteuert. Hierzu werden die den einzelnen Säscharen zugeordneten Dosiereinheiten zur Dosierung des aus einem Vorratsbehälter fliessenden Saatgutes zentral gesteuert. Der Säreihenabstand bleibt dabei konstant.

Die unmittelbare Abhängigkeit der Korndichte pro Quadratmeter von der Verteildichte in den einzelnen Säreihen kommt dem Pflanzenwuchs nicht entgegen. Im Hinblick auf optimalen Pflanzenwuchs ist ein von Pflanze zu Pflanze abhängiges Verteilungsmuster des Saatgutes wünschenswert, bei dem der Säreihenabstand in einer Beziehung zur Verteildichte steht. Es ist wünschenswert, ein bestimmtes Verteilungsmuster des Saatgutes über einen grossen Bereich unterschiedlicher Korndichten aufrechterhalten zu können, was jedoch bei den bekannten Sämaschinen, bei denen der Säreihenabstand starr vorgegeben ist, nicht durchgeführt werden kann.

Aus der FR-A-1 353 116 ist nun bereits eine Sämaschine der eingangs genannten Art bekannt, bei der sich der Säreihenabstand ändern lässt. Dabei wird von einem Scherengestell Gebrauch gemacht, mit der die auf einer Trägerwelle verschiebbaren Säschare derart bewegt werden, dass sie immer gleichmässig voneinander beabstandet sind.

Diese Anordnung hat den grossen Nachteil, dass für eine Vervielfachung des Säreihenabstandes die Trägerwelle von vornherein entsprechend lang bemessen werden muss. Es ergeben sich somit völlig unpraktikable Breiten der Sämaschine. Sollte aber an den bisher üblichen Breiten von Sämaschinen festgehalten werden, so würden sich bei Einstellung des geringsten Säreihenabstandes lächerliche Fahrgassenbreiten ergeben. So ein Sästreifen wäre dann schmäler als die Traktorspur, so dass sich die nebeneinanderliegenden Fahrgassen überlappen müssten, was natürlich nicht tragbar wäre.

Damit ist gezeigt, dass die bekannte Sämaschine in der Praxis schwerlich einsetzbar ist.

Der Erfindung liegt nun die Aufgabe zugrunde, hier Abhilfe zu schaffen und das Verfahren der eingangs genannten Art so zu verbessern, dass es in der Praxis problemlos anwendbar ist.

Diese Aufgabe wird erfindungsgemäss dadurch gelöst, dass einzelne Säschare in regelmässigen Abständen wahlweise inaktiviert und die dazwischenliegenden Säschare zur Aufrechterhaltung eines gleichweiten Abstandes voneinander nachgestellt werden.

Nach der Erfindung kann also beispielsweise mit abnehmender Verteildichte der Säreihenabstand vergrössert bzw. mit zunehmender Verteildichte der Säreihenabstand verkleinert werden, ohne dass sich hierbei die Breite des Sästreifens ändert. Es kann überhaupt das Verteilungsmuster des Saatgutes variiert werden, so dass der Pflanzenwuchs optimal begünstigt werden kann. Für viele Pflanzen kann dabei als Regel angesehen werden, dass sich der Abstand der Körner in der Säreihe zum Abstand der Säreihen zueinander verhalten soll wie 1:4.

Die Änderung des Verteilungsmusters des Saatgutes lässt sich erfindungsgemäss durch wahlweises Inaktivieren einzelner Säschare in regelmässigen Abständen und seitliches Verschieben der dazwischenliegenden Säschare quer zur Fahrtrichtung derart, dass die Säreihen gleichweit voneinander entfernt sind, erreiche. Das Inaktivieren der einzelnen Säschare erfolgt dabei durch Absperren der einzelnen Säschare von der Saatgutzufuhr, indem ein Sperrschieber verwendet oder die zugehörige Dosiereinheit, die den Fluss des Saatgutes aus dem Vorratsbehälter zur Säschar steuert, ausgekuppelt wird, sowie durch Ausheben der abgesperrten Säschar, so dass sie nicht mehr in den zu bearbeitenden Boden greift.

Soll beispielsweise mit einer 3 m breiten Sämaschine Winterweizen mit einer Korndichte von 400 Körner/qm mit einer Verteildichte von 2,5 cm in den Reihen gesät werden, so werden alle 30 Schare der Sämaschine verwendet, so dass der Säreihenabstand dann 10 cm beträgt.

Soll nun mit der gleichen Maschine bspw. Sommerweizen mit einer Korndichte von 275 Körner/qm gesät werden, wobei die Verteildichte 3 cm betragen soll, so werden 25 Säschare verwendet, die jeweils 12 cm voneinander entfernt sind. Wie bei dem vorangegangenen Beispiel, so ergibt sich auch hier das Verhältnis zwischen Kornabstand in den Reihen und Reihenabstand von 1:4. Im letzteren Fall wird dabei die sechste, zwölfte, achtzehnte usw. ausgehoben und bleiben die dritte, neunte, fünfzehnte usw. unverändert, während die übrigen Säscharen seitlich derart verschoben werden, dass sich ein gegenseitiger Abstand von 12 cm für die nicht ausgehobenen Säscharen ergibt.

Der Säreihenabstand lässt sich natürlich nicht stufenlos verstellen. Dennoch kann jede gewünschte Korndichte durch Korrektur bzw. Änderung der Verteilungsdichte für die aktiven Säscharen erzielt werden, was über die den einzelnen Säscharen zugeordneten Dosiereinheiten erfolgt.

Für das erfindungsgemässe Verfahren ist eine Sämaschine besonders geeignet, bei der die Säschare an Hebelarmen befestigt sind, die auf einer Trägerwelle gelagert sind, wobei die Säschare seitlich quer zur Fahrtrichtung verschiebbar gelagert sind und mit ihnen zugeordneten, von einem gemeinsamen Antriebselement angetriebenen Einstellorganen für ein seitliches Verstellen der Säschare zusammenwirken und erfindungsgemäss die Hebelarme seitlich quer zur Fahrtrichtung verschwenkbar auf der Trägerwelle gelagert sind. Bei dieser Lösung ist hervorzuheben, dass die seitliche Verstellung der Säschare zentral gesteuert wird, so dass gegenüber einer individuellen Einstellung die Konstanz der Säreihenabstände untereinander sichergestellt werden kann.

Das Antriebselement kann ein linear verschieblicher Träger sein. Dabei können die Einstellorgane auf dem linear verschiebbaren Träger angeordnet sein, wenn die die Säschare tragenden Hebelarme verschwenkbar am Träger gelagert sind und an den den Säscharen entgegengesetzten Enden über die Trägerwelle vorstehende Verlängerungen aufweisen, wobei die Einstellorgane für ein unterschiedlich weites Verschwenken der einzelnen Hebelarme in unterschiedlichen radialen Abständen von der Trägerwelle an den Verlängerungen angreifen.

Das Antriebselement muss nicht linear verschiebbar sein. Es kann sich hierbei auch um eine drehbare Antriebswelle handeln, wobei die Einstellorgane koaxial zueinander angeordnete Scheiben sind.

Vorzugsweise sind die Einstellscheiben ringförmig ausgebildet und koaxial zur Trägerwelle angeordnet und beaufschlagen die schwenkbar an der Trägerwelle gelagerten Hebelarme für ein seitliches Verstellen, wobei die Antriebswelle parallel zur Trägerwelle verläuft und den Einstellscheiben zugeordnete und mit diesen kämmende Zahnräder zur Verstellung der Säschare aufweist.

Bei einer zu der vorhergehenden Ausführungsform alternativen Ausführungsform der Erfindung weisen die Hebelarme an den den Säscharen entgegengesetzten Enden über die Trägerwelle vorstehende Verlängerungen auf, die mit den Einstellscheiben zusammenwirken, welche koaxial auf der parallel zur Trägerwelle verlaufenden Antriebswelle angeordnet und drehfest mit ihr verbunden sind. Bei dieser Ausführungsform können die Hebelarme entweder verschwenkbar an der Trägerwelle befestigt oder aber in axialer Richtung auf der Trägerwelle verschiebbar angeordnet sein.

Bei den beiden vorhergehenden Ausführungsformen werden die Einstellscheiben gemeinsam um ihre Achsen gedreht. Bei den sich drehenden Einstellscheiben ist es nun zweckmässig, wenn diese in Winkelabständen voneinander angeordnete und auf die Hebelarme seitlich einwirkende Nocken und/oder Vertiefungen zum seitlichen Verstellen der Säschare aufweisen. In verschiedenen Drehstellungen der Einstellscheiben kommen dann unterschiedliche Nocken und/oder Vertiefungen in Anlage mit den Hebelarmen, so dass verschiedene Säreihenabstände einstellbar sind.

Die in regelmässigen Abständen auftretenden inaktiven Säschare werden ausgehoben, also vom Boden entfernt, indem beiden obigen Ausführungsformen die Einstellscheiben zweckmässigerweise mit an den Hebelarmen angreifenden Zapfen versehen und gemeinsam in axialer Richtung für ein In- und Ausser-Eingriff-Bringen der Zapfen mit den Hebelarmen verschoben werden. Eine Verstellung des Säreihenabstandes wird dann vorgenommen, indem nach dem Ausheben aller Schare durch eine bekannte zentrale Scharaushebeeinrichtung zunächst die Einstellscheiben in axialer Richtung verschoben werden, was besonders leicht ist, wenn sie alle auf einer gemeinsamen Antriebswelle sitzen, so dass in Eingriff mit den Hebelarmen stehende bzw. die Hebelarme übergreifende Zapfen der Einstellscheiben sich ebenso wie die Nocken von den Hebelarmen lösen. Dann können alle Einstellscheiben verdreht werden. Darauf wird die axiale Verschiebung rückgängig gemacht, so dass – soweit Zapfen in dieser Drehstellung vorhanden sind – diese in Eingriff mit den Hebelarmen kommen bzw. diese übergreifen, worauf dann mit Hilfe der auf alle Schare wirkenden zentralen Aushebeeinrichtung alle Schare bis auf die, die durch die Zapfen an einem Absinken gehindert werden, auf den Boden abgesenkt werden. Die neuen Winkelpositionen der übrigen Einstellscheiben haben neue seitliche Verstellungen der übrigen Hebelarme und damit der in den Boden greifenden Säschare zur Folge.

Anstelle der zentralen gleichzeitigen Steuerung von seitlicher Verstellung der Säschare und Aushebung der inaktiven Säschare wäre es aber auch möglich, eine von der Einrichtung zum seitlichen Verstellen der Säschare getrennte Einrichtung zum vereinzelten Ausheben der Säschare vorzusehen, die unabhängig von der ersteren zu bedienen wäre.

Nocken und Vertiefungen auf der Einstellscheibe können jeweils nur auf eine kleine Auflagefläche mit den Hebelarmen zusammenwirken, so dass bei vertikalem Verschwenken der Hebelarme in Folge von Bodenunebenheiten sich der seitliche Abstand der Säschare stark ändern kann. Dieser Erscheinung kann entgegengewirkt werden, wenn von Nocken abgesehen wird und die mit den Hebelarmen zusammenwirkenden Seiten der Einstellscheiben jeweils als plane Flächen ausgebildet werden, wobei für ein unterschiedlich starkes seitliches Verstellen der einzelnen Hebelarme die Neigung der planen Flächen sowie ggf. die Drehausgangsstellungen verschieden gewählt werden. Diese Ausbildung hat auch noch den Vorteil, dass für eine Änderung der seitlichen Verstellung der Hebelarme die Einstellscheiben in Anlage mit den Hebelarmen bleiben können, da keine Unstetigkeitsstellen auf der Anlagefläche bei Drehung der Einstellscheiben auftreten.

Die Möglichkeit, die Hebelarme unterschiedlich stark seitlich zu verstellen bei unterschiedlicher Anzahl inaktivierter Säschare, derart, dass der Säreihenabstand über die Breite der Sämaschine hinweg konstant ist, lässt sich weiterhin erhöhen, wenn bei der Sämaschine, bei der die Einstellscheiben mit Zahnrädern kämmen, die Übersetzungen der mit den Einstellscheiben kämmenden Zahnräder verschieden gewählt werden.

Zu den vorangegangenen Ausführungsformen lässt sich sagen, dass anstelle der unterschiedlich hohen Nocken, deren Höhe nicht nur auf jeder Einstellscheibe schwankt, sondern auch von Einstellscheibe zu Einstellscheibe sich ändert, nun die zwar über jede Einstellscheibe jeweils gleichbleibende, jedoch von Einstellscheibe zu Einstellscheibe unterschiedliche Neigung der Seitenflächen in Verbindung mit unterschiedlichen Drehausgangsstellungen der Einstellscheiben und unterschiedlichen Drehwinkeln tritt, so dass die gestellten Forderungen auch ohne Nocken erfüllbar sind.

Gerade bei den Ausführungsformen ohne Nocken auf den Einstellscheiben zur seitlichen Verstellung der Hebelarme ist es vorteilhaft, wenn die Antriebswelle in bestimmten Drehpositionen einen Eingriff bestimmter Säschare in den Boden verhindernde, mit den Hebelarmenden stirnseitig in Anschlag kommende Nocken aufweist, um die inaktiven Säschare in einem ausgehobenen Zustand zu halten. Diese Ausführungsform hat vor allen Dingen im Gegensatz zu den seitlich von den Einstellscheiben vorstehenden Zapfen, die dem gleichen Zweck dienen, den Vorteil, dass ein axiales Verschieben der Antriebswelle überflüssig wird, um eine Verstellung des Säreihenabstandes herbeiführen zu können. Es genügt vielmehr, dass über die zentrale bekannte Aushebeeinrichtung alle Säschare angehoben werden, so dass die Hebelarmenden mit ihren Stirnseiten sich von den Nocken entfernen, worauf jederzeit die Antriebswelle verdreht werden kann.

Anstelle einer Drehung der Einstellscheiben zum seitlichen Verstellen der Säschare ist es nach einer weiteren Ausbildung der Erfindung auch möglich, bei einer Sämaschine, deren Hebelarme an den den Säscharen entgegengesetzten Enden über die Trägerwelle vorstehende Verlängerungen aufweisen, die mit den Einstellscheiben zusammenwirken, die parallel zur Trägerwelle verlaufende Antriebswelle mit unterschiedlich steilen Gewindeabschnitten zu versehen und die einzelnen Scheiben koaxial zur Antriebswelle auf den Gewindeabschnitten nach Art einer Mutter anzuordnen und sie gegenüber der Antriebswelle drehfest zu halten. Es handelt sich hier also um eine Art Spindelantrieb.

Zweckmässigerweise sind die Hebelarme federnd gegen die einseitig auf sie wirkenden Einstellscheiben beaufschlagt.

Die Hebelarme aber können sich jeweils auch zwischen den Einstellscheiben eines dem jeweiligen Hebelarm zugeordneten Paares hineinerstrecken für eine von beiden Seiten her erfolgende Zwangsführung der Hebelarme. Diese Ausführungsform ist besonders vorteilhaft in Verbindung mit den zur Trägerwelle koaxialen Einstellscheiben, wobei die Einstellscheibenpaare zweckmässigerweise gegenseitig über elastische Stützringe abgestützt werden, die zudem den Vorteil haben, dass eine seitliche Bewegung einer Säschar aufgrund von Bodenunebenheiten in gedämpfter Form auf die anderen Säschare übertragen, so dass sich der Abstand untereinander nur wenig ändert.

Für eine verschwenkbare Lagerung der Hebelarme der Säschare eignet sich die in der DE-PS 31 17 536 beschriebene Anordnung, bei der ring- oder hülsenförmige Torsionsfederelemente, die vorzugsweise im Querschnitt eine Verdünnung aufweisen, aus elastomerem Material verwendet werden, welche bei geeigneter Bemessung nicht nur für eine Vorspannkraft der Säschare in vertikaler Richtung sorgen, sondern auch die gewünschte seitliche Verschwenkung zulassen und dabei gleichzeitig für das Rückstellmoment sorgen. Dabei kann jederzeit durch entsprechende Vorkehrungen das Torsionselement so ausgelegt werden, dass der Hebelarm immer nach einer Seite hin gegen die Einstellscheibe gedrückt wird. Das Rückstellmoment darf also nicht seitlich in Nullage der Hebelarme Null sein.

Eine weitere Abwandlung der Erfindung besteht darin, dass die verschwenkbar an der Trägerwelle gelagerten Hebelarme an den den Säscharen entgegengesetzten Enden über die Trägerwelle vorstehende Verlängerungen mit einem gabelförmigen Ende versehen sind, in die jeweils eine Einstellscheibe für eine wahlweise Beaufschlagung des Hebelarmes nach der einen oder anderen Seite greift. Da her die Antriebswelle für die Einstellscheibe nicht axial verschoben werden kann, müssen zum Ausheben der inaktiven Säschare die Nocken auf der Antriebswelle vorgesehen sein.

Die Zentralisierung der Steuerung kann nur weitergetrieben werden, indem ein Dosierrechner vorgesehen wird, der aus einer vorgegebenen Korndichte sowie einem vorgegebenen Säreihenabstand die Verteildichte anzeigt, die über die von einzelnen Säscharen zugeordneten Dosiereinheiten eingestellt wird, wo die Dosiereinheiten gleich direkt über einen derartigen Dosierrechner gesteuert werden können.

Vorzugsweise sind die Stellung des Antriebselementes für die Einstellorgane erfassende Schaltelemente zum Unterbrechen des Saatgutzuflusses zu den inaktiven Säscharen vorgesehen.

Weitere Vorteile, Einzelheiten und Merkmale der Erfindung ergeben sich aus der nachstehenden, anhand der beiliegenden Zeichnung erfolgenden Beschreibung bevorzugter Ausführungsbeispiele. In der Zeichnung stellen dar:

Fig. 1 schematisch eine Draufsicht auf einen Teil der erfindungsgemässen Sämaschine

Fig. 2 schematisch einen Schnitt durch die Anlenkpunkte von Hebelarmen bei einer Sämaschine gemäss einer anderen Ausführungsform und

Fig. 3 schematisch eine Seitenansicht bei einer Sämaschine ähnlich der in Fig. 2 dargestellten.

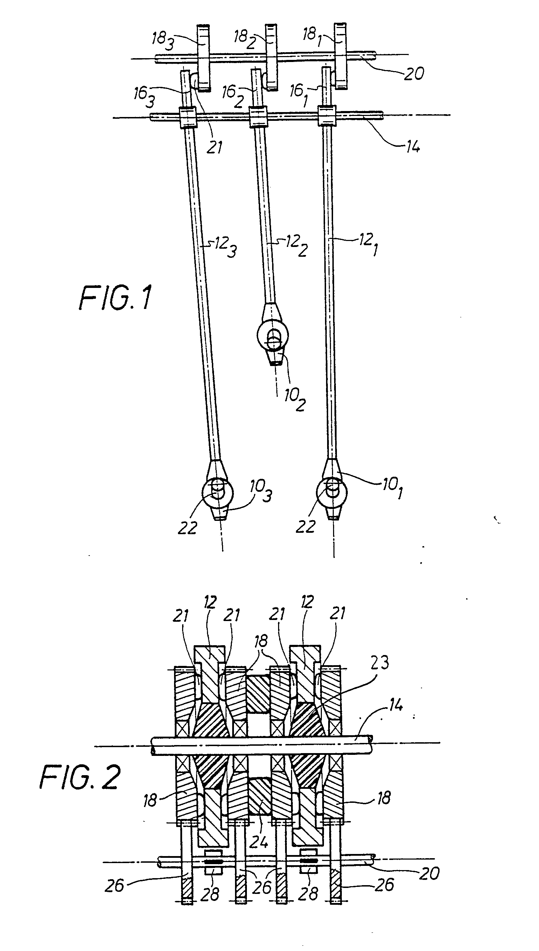

Bei der in Fig. 1 gezeigten Sämaschine sind der Vorratsbehälter, die Dosiereinrichtungen, und die Räder weggwelassen. Säschare $10_1$, $10_2$ und $10_3$

sind über Hebelarme $12_1$, $12_2$ und $12_3$ an einer gemeinsamen Trägerwelle 14 angelenkt, wie dies beispielsweise in der DE-PS 31 17 536 beschrieben ist. Dabei wird von hülsenförmigen Torsionsfederelementen aus elastomerem Material Gebrauch gemacht, die zwischen der Trägerwelle und den jeweils sie umgebenden Hebelarmen vorgesehen sind. Diese nicht näher gezeigten Torsionsfederelemente sorgen einerseits für eine auf die Säschare in vertikaler Richtung wirkende, die Säschare in Arbeitsstellung gegen den Boden drückende Vorspannkraft und lassen bei geeigneter Dimensionierung andererseits eine Verschwenkung der Hebelarme $12_1$, $12_2$ und $12_3$ zu, wobei sie auch hier automatisch für ein Rückstellmoment sorgen. Die Hebelarme weisen über die Trägerwelle 14 vorstehende Verlängerungen $16_1$, $16_2$ und $16_3$ auf, die mit Einstellscheiben $18_1$, $18_2$ und $18_3$ wie gezeigt zusammenwirken. Die Einstellscheiben sind drehfest auf einer Antriebswelle 20 befestigt und weisen auf der den Verlängerungen $16_1$, $16_2$ und $16_3$ zugewandten Seite Nocken 21 oder Vertiefungen auf, welche in bestimmten Winkelabständen um die Einstellscheiben $18_1$, $18_2$ und $18_3$ angeordnet sind. Die Nocken 21 oder Vertiefungen auf den Einstellscheiben $18_1$, $18_2$ und $18_3$ sind unterschiedlich hoch bzw. tief, so dass die Hebelarme $12_1$, $12_2$ und $12_3$ verschieden weit seitlich verschwenkt werden können. Damit werden gleichzeitig die Säschare $10_1$, $10_2$ und $10_3$ in seitlicher Richtung verstellt. In diesem Zusammenhang ist darauf hinzuweisen, dass die Torsionsfederelemente ohne weiteres derart dimensioniert werden können, dass die Verlängerungen 16 über die Nullage (in der die Hebelarme 12 senkrecht zur Trägerwelle 14 stehen) hinaus auch auf die andere Seite gegen die nur von einer Seite her auf die Verlängerungen 16 wirkenden Einstellscheiben 18 gedrückt werden. An den Säscharen $10_1$, $10_2$ und $10_3$ sind noch Rohrstutzen 22 vorgesehen, die mit den zum Vorratsbehälter führenden teleskopartigen Särohren zu verbinden sind.

Jede Drehstellung der Antriebswelle 20 entspricht einer bestimmten Winkelstellung der Hebelarme $12_1$, $12_2$ und $12_3$, oder bei einigen Hebelarmen einer Anhebung nach oben, so dass die zugehörigen Säschare nicht in den Boden greifen. In diesem Falle sind die zugehörigen Säschare gesperrt, indem der Saatgutfluss zu ihnen mit Hilfe eines Sperrschiebers unterbrochen oder die zugehörige Dosiereinheit ausgekuppelt wird, wie dies an sich bekannt ist. Das Ausheben der Säschare wird dabei mit Hilfe eines an der entsprechenden Einstellscheibe 18 vorgesehenen Zapfens erreicht, der in die Verlängerung des entsprechenden Hebelarmes eingreift oder diese von oben her übergreift und so den Hebelarm hochhält.

Eine Neueinstellung der Säschare wird vorgenommen, indem zunächst über die an sich bekannte zentrale Aushebeeinrichtung alle Säschare aus der Arbeitsstellung in die Transportstellung ausgehoben werden. Die bereits inaktiven ausgehobenen Säschare werden nur noch gelockert.

Dann wird die Antriebswelle 20 zusammen mit den Einstellscheiben 18 seitlich verschoben, so dass die Nocken 21 ausser Anlage mit den Verlängerungen 16 kommen, die mit den Verlängerungen 16 in Eingriff stehenden oder diese übergreifenden Zapfen, die für das Ausheben der inaktiven Säschare sorgen, sich von den Verlängerungen lösen und die Hebelarme 12 eine definierte Ausgangsstellung hinsichtlich einer seitlichen Bewegung einnehmen, in der sie nicht mit den Einstellscheiben zusammenwirken. Dann wird die Antriebswelle 20 in die neue Drehposition gebracht und zurückgeschoben, bis die Einstellscheiben wieder mit den Verlängerungen der Hebelarme zusammenwirken und werden die Säschare über die zentrale Aushebeeinrichtung in die Arbeitsstellung abgesenkt. Dabei bleiben die Säschare angehoben, deren zugehörige Hebelarme durch Zapfen an den Einstellscheiben an einem Absenken gehindert werden. Die anderen Säschare werden nunmehr je nach Nocken, welcher jetzt in Anlage mit der Verlängerung des zugehörigen Hebelarmes steht, entsprechend seitlich ausgelenkt. Es ergibt sich also eine neue Anordnung von aktiven und inaktiven Säscharen, wobei auch die Auslenkung der dazwischenliegenden aktiven Säschare sich von der vorangegangenen Stellung unterscheiden kann.

Das Inaktivieren einzelner Säschare verbunden mit dem Ausheben dieser Säschare sowie die seitliche Auslenkung der dazwischenliegenden Säschare – beides in einem bestimmten Muster – lässt eine Einstellung des gegenseitigen Säscharenabstandes zu, wobei der gegenseitige Säscharenabstand über die gesamte Breite der Sämaschine gleichbleibt. Dies soll mit der nachfolgenden Tabelle veranschaulicht werden anhand einer Sämaschine mit 3 m Arbeitsbreite und insgesamt 30 Scharen, wobei in der Tabelle I bedeutet, dass keine seitliche Auslenkung der Säschare vorhanden ist, 0 bedeutet, dass die Säschar inaktiv und angehoben ist und die Zahlen mit Vorzeichen die seitliche Verschiebung der jeweiligen Säschar in cm nach rechts oder nach links bedeuten. Der Einfachheit halber sind nicht alle Scharenummern angegeben. Vielmehr ist die Reihe nach der 15. Schar abgebrochen.

Anstatt mit der Antriebswelle 20 drehfest verbundene Einstellscheiben 18 zu verwenden, ist es auch möglich, dass die Einstellscheiben 18 nach Art von Muttern auf Gewindeabschnitte der Antriebswelle 20 aufsitzen, die unterschiedlich steil sind, wobei die Einstellscheiben in Bezug auf die Sämaschine drehfest gehalten werden, so dass bei Drehen der Antriebswelle eine axiale Verschiebung der Einstellscheiben erfolgt und auf diese Weise die Hebelarme 12 seitlich ausgelenkt werden.

Nocken an den Einstellscheiben sind dann nicht erforderlich. Allerdings müsste dann eine zweite Einrichtung zum Ausheben der inaktiven Säschare hinzutreten.

In Fig. 2 wird eine andere Ausführungsform gezeigt. Auf der Trägerwelle 14 ist das hülsenförmige oder besser scheibenförmige Torsionsfeder-

| Anzahl der wirksamen Schare | 1 | 2 | 3 | 4 | 5 | 6 | 7 | 8 | 9 | 10 | 11 | 12 | 13 | 14 | 15 | Reihen-abstand | Winkel-stellg. d. Einstell-scheiben |
|---|---|---|---|---|---|---|---|---|---|---|---|---|---|---|---|---|---|
| 30 | 1 | 1 | 1 | 1 | 1 | 1 | 1 | 1 | 1 | 1 | 1 | 1 | 1 | 1 | 1 | 10 | 72° |
| 25 | -4 | -2 | 1 | +2 | +4 | 0 | -4 | -2 | 1 | +2 | +4 | 0 | -4 | -2 | 1 | 12 | 144° |
| 20 | -2,5 | +2,5 | 0 | -2,5 | +2,5 | 0 | -2,5 | +2,5 | 0 | -2,5 | +2,5 | 0 | -2,5 | +2,5 | 0 | 15 | 216° |
| 15 | 0 | 1 | 0 | 1 | 0 | 1 | 1 | 1 | 0 | 1 | 0 | 1 | 0 | 1 | 0 | 20 | 288° |
| 10 | 1 | 0 | 0 | 1 | 0 | 0 | 1 | 0 | 0 | 1 | 0 | 0 | 1 | 0 | 0 | 30 | 360° |

element 23 befestigt, dessen Aussenumfang von einer ringförmigen Ausbildung des eine Säschar tragenden Hebelarmes 12 umgriffen wird. Die Einstellscheiben 18 sind hier als Ringe ausgebildet, die koaxial zur Trägerwelle 14 angeordnet sind und von den ringförmigen Ausbildungen der Hebelarme wie gezeigt geführt sind, indem die ringförmigen Ausbildungen der Hebelarme 12 die Einstellscheiben 18 um ihren gesamten Umfang und über einen Teil ihrer Breite übergreifen. Die Einstellscheiben 18 weisen die auf die ringförmigen Ausbildungen der Hebelarme einwirkenden, von der vorhergehenden Ausführungsform bekannten Nocken 21 auf. Sie werden auch in axialer Richtung gehalten bzw. geführt, und zwar mit Hilfe von elastischen Stützringen 24, wie dies aus Fig. 2 hervorgeht. Eine Drehung der Einstellscheiben 18 erfolgt über Zahnräder 26, die auf einer zur Trägerwelle 14 parallelen Antriebswelle 20 befestigt sind und wie gezeigt mit dem verzahnten Aussenumfang der Einstellscheiben in dem von den ringförmigen Ausbildungen der Hebelarme nicht ergriffenen Bereich zusammenwirken. Eine Verschwenkung des Hebelarms nach beiden Seiten ist dabei leicht möglich, weil jede ringförmige Ausbildung des Hebelarmes auf beiden Seiten von jeweils einer Einstellscheibe umgeben ist, die auf den Hebelarm einwirkt. Jedem Hebelarm sind also zwei Einstellscheiben zugeordnet.

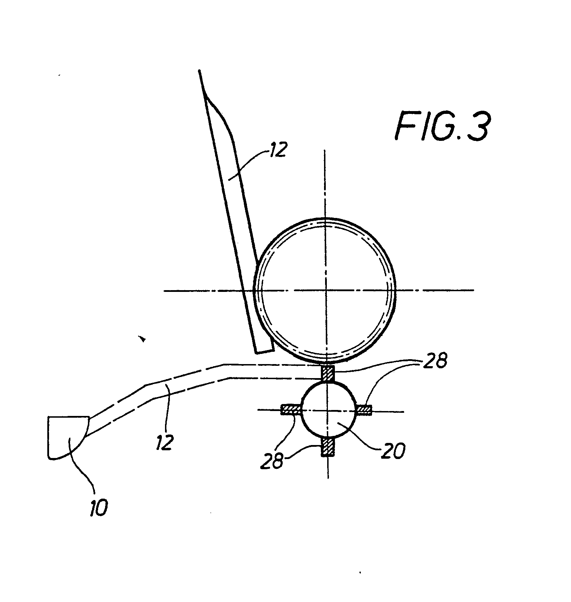

Bei der letzten Ausführungsform wird das Ausheben der einzelnen inaktiven Säschare mit Hilfe von auf der Antriebswelle 20 angeordneten Nocken 28 besorgt, die stirnseitig mit den Hebelarmen zusammenwirken, wie dies aus Fig. 3 ersichtlich ist.

Es können noch Schaltelemente vorgesehen sein, die die Stellung des Antriebselementes für die Einstellorgane erfassen, so dass der Saatgutzufluss zu den inaktiven Säscharen automatisch unterbrochen werden kann.

**Patentansprüche**

1. Verfahren zur Steuerung der Korndichte der Aussaat bei einer Sämaschine mit einer Vielzahl von quer zur Fahrtrichtung nebeneinander angeordneter Säschare zum Säen des Saatgutes in voneinander beabstandeten Säreihen, wobei der Säreihenabstand geändert wird durch seitliches Verschieben der Säschare quer zur Fahrtrichtung derart, dass die Säreihen gleichweit voneinander entfernt sind, dadurch gekennzeichnet, das einzelne Säschare in regelmässigen Abständen wahlweise inaktiviert und die dazwischenliegenden Säschare zur Aufrechterhaltung eines gleichweiten Abstandes voneinander nachgestellt werden.

2. Verfahren nach Anspruch 1, dadurch gekennzeichnet, dass die Verteildichte für die aktiven Säschare geändert wird.

3. Sämaschine, insbesondere zur Durchführung des Verfahrens nach Anspruch 1, wobei Säschare an Hebelarmen befestigt sind, die auf einer Trägerwelle gelagert sind, die Säschare (10) seitlich quer zur Fahrtrichtung verschiebbar gelagert sind und mit von einem gemeinsamen Antriebselement (20) angetriebenen Einstellorganen (18) für ein seitliches Verstellen der Säschare zusammenwirken, dadurch gekennzeichnet, dass die Hebelarme (12) seitlich quer zur Fahrtrichtung verschwenkbar auf der Trägerwelle (14) gelagert sind.

4. Sämaschine nach Anspruch 3, dadurch gekennzeichnet, dass das Antriebselement ein linear verschiebbarer Träger ist.

5. Sämaschine nach Anspruch 4, dadurch gekennzeichnet, dass die Hebelarme (12) an den den Säscharen (10) entgegengesetzten Enden über die Trägerwelle (14) vorstehende Verlängerungen (16) aufweisen, dass die Einstellorgane (18) auf den linear verschiebbaren Träger angeordnet sind und für ein unterschiedlich weites Verschwenken der einzelnen Hebelarme in unterschiedlichen radialen Abständen von der Trägerwelle (14) an den Verlängerungen (16) angreifen.

6. Sämaschine nach Anspruch 3, dadurch gekennzeichnet, dass das Antriebselement eine drehbare Antriebswelle (20) ist und die Einstellorgane koaxial zueinander angeordnete Scheiben (18) sind.

7. Sämaschine nach Anspruch 6, dadurch gekennzeichnet, dass die Einstellscheiben (18) ringförmig ausgebildet und koaxial zur Trägerwelle (14) angeordnet sind und die schwenkbar an der Trägerwelle (14) gelagerten Hebelarme für ein seitliches Verstellen beaufschlagen, wobei die Antriebswelle (20) parallel zur Trägerwelle (14) verläuft und den Einstellscheiben (18) zugeordnete und mit diesen kämmende Zahnräder (26) zur Verstellung der Säschare aufweist.

8. Sämaschine nach Anspruch 6, dadurch gekennzeichnet, dass die Hebelarme (12) an den den Säscharen entgegengesetzten Enden über die Trägerwelle (14) vorstehende Verlängerungen (16) aufweisen, die mit den Einstellscheiben (18) zusammenwirken, welche koaxial auf der parallel zur Trägerwelle (14) verlaufenden Antriebswelle (20) angeordnet und drehfest mit ihr verbunden sind.

9. Sämaschine nach einem der Ansprüche 7 bis 8, dadurch gekennzeichnet, dass die Einstellscheiben (18) in Winkelabständen voneinander angeordnete und auf die Hebelarme (16) seitlich einwirkende Nocken (21) und/oder Vertiefungen zum seitlichen Verstellen der Säschare aufweisen.

10. Sämaschine nach einem der Ansprüche 7 bis 9, dadurch gekennzeichnet, dass die Einstellscheiben (18) zum Ausheben der inaktiven Säschare an den Hebelarmen (12) angreifende Zapfen aufweisen und gemeinsam in axialer Richtung für ein In- und Ausser-Eingriff-Bringen der Zapfen mit den Hebelarmen (12) verschieblich sind.

11. Sämaschine nach einem der Ansprüche 7 bis 8, dadurch gekennzeichnet, dass die mit den Hebelarmen zusammenwirkenden Seiten der Einstellscheiben jeweils plane Flächen sind, wobei für ein unterschiedlich starkes seitliches Verstellen der einzelnen Hebelarme die Neigung der Planenfläche sowie ggf. die Drehausgangsstellun-gen verschieden sind.

12. Sämaschine nach Anspruch 7 in Verbindung mit Anspruch 11, dadurch gekennzeichnet, dass für ein unterschiedlich starkes seitliches Verstellen der einzelnen Hebelarme die Übersetzungen der mit den Einstellscheiben kämmenden Zahnräder verschieden sind.

13. Sämaschine nach einem der Ansprüche 6 bis 11, dadurch gekennzeichnet, dass die Antriebswelle in bestimmten Drehpositionen einen Eingriff bestimmter Säschare in den Boden verhindernde, mit den Hebelarmenden stirnseitig in Anschlag kommende Nocken (28) aufweist.

14. Sämaschine nach Anspruch 6, dadurch gekennzeichnet, dass die Hebelarme (12) an den den Säscharen (10) entgegengesetzten Enden über die Trägerwelle (14) vorstehende Verlängerungen (16) aufweist, die mit den Einstellscheiben (18) zusammenwirken, und dass die parallel zur Trägerwelle (14) verlaufende Antriebswelle (20) mit unterschiedlich steilen Gewindeabschnitten versehen ist und die einzelnen Scheiben koaxial zur Antriebswelle auf den Gewindeabschnitten nach Art einer Mutter angeordnet und gegenüber der Antriebswelle drehfest gehalten sind.

15. Sämaschine nach einem der Ansprüche 6 bis 14, dadurch gekennzeichnet, dass die Hebelarme (12) sich jeweils zwischen den Einstellscheiben (18) eines dem jeweiligen Hebelarm zugeordneten Paares hineinerstrecken für eine von beiden Seiten her erfolgende Zwangsführung der Hebelarme.

16. Sämaschine nach einem der Ansprüche 6 bis 16, dadurch gekennzeichnet, dass die verschwenkbar an der Trägerwelle gelagerten Hebelarme an den den Säscharen entgegengesetzten Enden über die Trägerwelle vorstehende Verlängerungen mit einem gabelförmigen Ende haben, in die die Einstellscheiben für eine wahlweise Beaufschlagung des Hebelarmes nach der einen oder anderen Seite greifen.

17. Sämaschine nach einem der Ansprüche 6 bis 16, dadurch gekennzeichnet, dass die verschwenkbare Lagerung der Hebelarme (12) auf der Trägerwelle (14) mit Hilfe eines elastomeren Ringes (23) erfolgt, der sowohl eine Elastizität bei einer Scherung in Umfangsrichtung als auch eine Elastizität bei einer Scherung senkrecht zur Ringebene aufweist.

18. Sämaschine nach einem der Ansprüche 3 bis 17, dadurch gekennzeichnet, dass die Stellung des Antriebselementes (20) für die Einstellorgane erfassende Schaltelemente zum Unterbrechen des Saatgutzuflusses zu den inaktiven Säscharen vorgesehen sind.

**Claims**

1. Method for controlling the grain density at which seed is sown in the case of a drilling machine having a plurality of drill coulters, arranged next to one another transverse to the direction of travel, for sowing the seed in mutually spaced drills, the drill spacing being altered by lateral displacement of the drill coulters transverse to the direction of travel such that the drills are quidistant, characterized in that individual drill coulters are deactivated selectively at regular intervals and the intermediate drill coulters are readjusted to preserve an equidistant mutual spacing.

2. Method according to Claim 1, characterized in that the distribution density for the active drill coulters is altered.

3. Drilling machine, in particular for carrying out the method according to Claim 1, drill coulters being attached to lever arms mounted on a supporting shaft, the drill coulters (10) being mounted so as to be displaceable laterally transverse to the direction of travel and cooperating with adjusting members (18) driven by a common drive element (20) for a lateral adjustment of the drill coulters, characterized in that the lever arms (12) are mounted on the supporting shaft (14) in a manner such that they can be swivelled laterally transverse to the direction of travel.

4. Drilling machine according to Claim 3, characterized in that the drive element is a linearly displaceable support.

5. Drilling machine according to Claim 4, characterized in that, at the ends opposite the drill coulters (10), the lever arms (12) have extensions (16) which project beyond the supporting shaft (14), in that the adjusting members (18) are arranged on the linearly displaceable support and, for swivelling the individual lever arms over different distances, engage the extensions (16) at different radial intervals from the supporting shaft (14).

6. Drilling machine according to Claim 3, characterized in that the drive element is a rotatable drive shaft (20) and the adjusting members are discs (18) arranged so as to be mutually coaxial.

7. Drilling machine according to Claim 6, characterized in that the adjusting discs (18) are of annular design and are arranged coaxial to the supporting shaft (14) and, for a lateral adjustment, actuate the lever arms swivel-mounted on the supporting shaft (14) the drive shaft (20) running parallel to the supporting shaft (14) and having gear wheels (26) assigned to the adjusting discs (18) and meshing with the latter, for adjusting the drill coulters.

8. Drilling machine according to Claim 6, characterized in that, at the ends opposite the drill coulters, the lever arms (12) have extensions (16) which project beyond the supporting shaft (14) and cooperate with the adjusting discs (18), which are arranged coaxially on the drive shaft (20) running parallel to the supporting shaft (14) and are connected in a rotationally solid manner with the latter.

9. Drilling machine according to either of Claims 7 or 8, characterized in that the adjusting discs (18) have cams (21) and/or depressions, which are arranged at angular intervals with respect to one another and act laterally on the lever arms for lateral adjustment of the drill coulters.

10. Drilling machine according to any one of Claims 7 to 9, characterized in that for lifting out the inactive drill coulters, the adjusting discs (18) have pins engaging the lever arms (12) and can be displaced in common in axial direction for engaging and disengaging the pins with/from the lever arms (12).

11. Drilling machine according to either of Claims 7 or 8, characterized in that those sides of the adjusting discs which cooperate with the lever arms are in each case planar surfaces, the inclination of the planar surface and, if appropriate, the starting positions for rotation being different for adjusting the individual lever arms laterally to differing degrees.

12. Drilling machine according to Claims 7 in conjunction with Claim 11, characterized in that, for adjusting the individual lever arms laterally to different degrees, the transmission ratios of the gear wheels meshing with the adjusting discs are different.

13. Drilling machine according to any one of Claims 6 to 11, characterized in that, in certain rotational positions, the drive shaft has cams (28) coming into contact at the end faces with the lever arm ends and preventing certain drill coulters from engaging in the soil.

14. Drilling machine according to Claim 6, characterized in that, at the ends opposite the drill coulters (10), the lever arms (12) has [sic] extensions (16), which project beyond the supporting shaft (14) and cooperate with the adjusting discs (18), and in that the drive shaft (20) running parallel to the supporting shaft (14) is provided with threaded sections whose pitsch differs and the individual discs are arranged coaxially to the drive shaft on the threaded section, in the manner of a nut, and are held in a rotationally solid manner with respect to the drive shaft.

15. Drilling machine according to any one of Claims 6 to 14, characterized in that the lever arms (12) in each case extend between the adjusting discs (18) of a pair assigned to the particular lever arm for forcible guidance of the lever arms from both sides.

16. Drilling machine according to any one of Claims 6 to 16, characterized in that, at the ends opposite the drill coulters, the lever arms, which are swivel-mounted on the support shaft, have extensions having a forked end, said extensions projecting beyond the supporting shaft, into which extensions the adjusting discs engage for a selective actuation of the lever arm to one side or the other.

17. Drilling machine according to any one of Claims 6 to 16, characterized in that the swivel mounting of the lever arms (12) on the supporting shaft (14) is accomplished with the aid of an elastomeric ring (23) which has both elasticity in the case of shearing in the peripheral direction and elasticity in the case of shearing perpendicular to the plane of the ring.

18. Drilling machine according to any one of Claims 3 to 17, characterized in that switching elements which detect the position of the drive element (20) for the adjusting members are provided for interrupting the supply of seed to the inactive drill coulters.

**Revendications**

1. Méthode de commande de la densité de grain du semis, appliquée sur un semoir possédant une pluralité de socs de semis disposés les uns à côté des autres, transversalement par rapport au sens de déplacement, pour semer une semence, en des lignes de semis disposées à distances les unes des autres, l'écartement des lignes de semis étant à cette occasion modifié par un déplacement latéral des socs de semis, effectué transversalement par rapport au sens de déplacement et de telle sorte que les socs de semis soient également éloignés les uns des autres, caractérisé en ce que des socs de semis individuels sont désactivés à volonté, à intervalles réguliers et que les socs de semis intermédiaires subissent un réglage ultérieur, pour maintenir un écartement mutuel égal.

2. Méthode selon la revendication 1, caractérisée en ce que la densité de répartition est modifiée pour les socs de semis actifs.

3. Semoir, en particulier pour l'exécution de la méthode de la revendication 1, où les socs de semis sont fixés sur des bras de levier, qui sont guidés sur un arbre support, les socs de semis (10) étant guidés de manière mobile, latéralement par rapport au sens de déplacement et opérant avec des organes de réglage (18) qui sont entraînés par un élément d'entraînement (20) commun, pour déplacer latéralement les socs de semis, caractérisé en ce que les bras de levier (12) sont guidés de manière basculante sur l'arbre support (14), latéralement et transversalement, par rapport au sens de déplacement.

4. Semoir selon la revendication 3, caractérisé en ce que l'élément d'entraînement est un support qui est mobile linéairement.

5. Semoir selon la revendication 4, caractérisé en ce que les bras de levier (12) possèdent sur les extrémités opposées aux socs de semis (10) des prolongements (16) émergeant sur l'arbre support (14), en ce que les organes de réglage (18) sont disposés sur le support mobile linéairement et attaquent les prolongements (16) pour réaliser un basculement des bras de levier individuels, avec des écartements radiaux d'avec l'arbre support (14) qui soient diversifiés.

6. Semoir selon la revendication 3, caractérisé en ce que l'élément d'entraînement est un arbre d'entraînement (20) tournant et que les organes de réglage sont des disques (18) qui sont disposés coaxialement les uns par rapport aux autres.

7. Semoir selon la revendication 6, caractérisé en ce que les disques de réglage (18) sont réalisés sous forme annulaire et sont disposés coaxialement par rapport à l'arbre support (14) et que les bras de levier qui sont guidés de manière basculante sur l'arbre support (14) sollicitent un déplacement latéral, l'arbre d'entraînement (20) se développant parallèlement à l'arbre support (14) et possédant les roues dentées (26), qui sont affectées aux disques de réglage (18) et qui engrènent avec eux, pour déplacer les socs de semis.

8. Semoir selon la revendication 6, caractérisé en ce que les bras de levier (12) possèdent, sur les extrémités opposées aux socs de semis, des prolongements (16) émergeant sur l'arbre support (14), qui opèrent avec des disques de réglage (18), disposés coaxialement sur l'arbre d'entraînement (20) se développant parallèlement à l'arbre support (14) et sont reliés rigidement en rotation avec lui.

9. Semoir selon l'une des revendications 7 et 8, caractérisé en ce que les disques de réglage (18) possèdent pour le déplacement latéral des socs de semis des cames (21) et/ou des cavités, disposées avec des écartements angulaires mutuels et agissant latéralement sur les bras de levier (16).

10. Semoir selon l'une des revendications 7 à 9, caractérisé en ce que les disques de réglage (18) destinés au désengagement des socs de semis inactifs possédent des tourillons attaquant les bras de levier et sont déplaçables en commun, en direction axiale, pour placer les tourillons en position d'engagement ou bien de désengagement sur les bras de levier (12).

11. Semoir selon l'une des revendications 7 et 8, caractérisé en ce que chacun des côtés des disques de réglage qui opèrent avec les bras de levier sont des surfaces planes, la pente des surfaces planes, ainsi que le cas échéant, les positions de départ étant à cette occasion différentes, pour produire un déplacement latéral d'importance diversifiée des bras de levier individuels.

12. Semoir selon la revendication 7, en liaison avec la revendication 11, caractérisé en ce que la démultiplication des roues dentées engrenant sur les disques de réglage sont différentes, afin de produire un déplacement latéral d'importance différent pour les bras de leviers individuels.

13. Semoir selon l'une des revendications 6 à 11, caractérisé en ce que l'arbre d'entraînement posséde des cames (28) venant frontalement en butée sur les extrémités de bras de levier, empêchant en certaines positions de rotation, que se produise un engagement de certains socs de semis dans le sol.

14. Semoir selon la revendication 6, caractérisé en ce que les bras de levier (12) possédent des prolongements (16), sur les extrémités opposées aux socs de semis (10), émergeant sur l'arbre support (14) et opérant avec les disques de réglage (18), et que l'arbre d'entraînement (20) qui se développe parallèlement à l'arbre support (14) est pourvu de sections filetées de pentes différentes et que les disques individuels sont disposés coaxialement à l'arbre d'entraînement, comme des écrous, sur les sections filetées et sont maintenus rigidement en rotation par rapport à l'arbre d'entraînement.

15. Semoir selon l'une des revendications 6 à 14, caractérisé en ce que les bras de levier (12) s'étendent chacun entre les disques de réglage (18) d'une paire qui est affectée à chaque bras de levier, pour réaliser depuis les deux côtés un guidage forcé des bras de levier.

16. Semoir selon l'une des revendications 6 à 16, caractérisé en ce que les bras de levier, qui sont guidés de manière basculante sur l'arbre support, possèdent des prolongements aux extrémités opposées aux socs de semis, émergeant sur l'arbre support et ayant une extrémité en forme de fourche, dans laquelle les disques de réglage attaquent pour réaliser une sollicitation du bras de levier, vers l'un ou l'autre côté.

17. Semoir selon l'une des revendications 6 à 16, caractérisé en ce que le guidage basculant des bras de levier (12) sur l'arbre support (14) s'effectue à l'aide d'un anneau (23) élastomère, qui possède aussi bien une élasticité en cas de cisaillement dans le sens périphérique, qu'également une élasticité en cas de cisaillement transversal au plan de l'anneau.

18. Semoir selon l'une des revendications 3 à 17, caractérisé en ce que des éléments de branchement sont prévus, captant la position de l'élément d'entraînement (20) pour les éléments de réglage, afin d'interrompre le flux de semence allant vers les socs de semis inactifs.

*FIG.1*

*FIG.2*

FIG.3